# EUROPÄISCHE PATENTANMELDUNG

(11) **EP 4 571 296 A1**
(43) Veröffentlichungstag der Anmeldung: **18.06.2025**
(21) Anmeldenummer: 23216634.8
(22) Anmeldetag: 14.12.2023
(51) Int. Cl.: G01N 21/64, G01N 21/94, G01N 21/956

(54) **VERFAHREN UND SYSTEM ZUM PRÜFEN EINER OBERFLÄCHE EINES PRÜFOBJEKTS**

(71) Anmelder: Fraunhofer-Gesellschaft zur Förderung der angewandten Forschung e.V., 80686 München (DE)
(72) Erfinder: BUCHTA, Dominic, 79110 Freiburg (DE); BEHRENDT, Vivien, 79110 Freiburg (DE); BLÄTTERMANN, Alexander, 79110 Freiburg (DE); RADEMACHER, Christian, 79110 Freiburg (DE)
(74) Vertreter: WSL Patentanwälte Partnerschaft mbB

(57) **Zusammenfassung**

Die vorliegende Erfindung betrifft ein Verfahren zum Prüfen einer Oberfläche (2) eines Prüfobjekts mit den Schritten: während einer ersten Objekterfassung, Beleuchten einer Mehrzahl von Objektpunkten auf der Oberfläche (2) des Prüfobjekts (3) mit elektromagnetischer Anregungsstrahlung (7,7') mit einer Anregungswellenlänge und einer ersten Anregungsintensität, Erfassen jeweils einer Intensität einer elektromagnetischen Lumineszenzstrahlung für eine Mehrzahl von Bildpunkten mit einer ersten Erfassungsempfindlichkeit, wobei die Lumineszenzstrahlung eines Bildpunkts jeweils von einem Objektpunkt aus der Mehrzahl von Objektpunkten abgestrahlt wird, und Ausgeben jeweils eines Intensitätssignals für jeden aus der Mehrzahl von Bildpunkten, wobei das Intensitätssignal die Intensität der Lumineszenzstrahlung des jeweiligen Objektpunkts repräsentiert und wobei die Lumineszenzstrahlung eine von der Anregungswellenlänge verschiedenen Lumineszenzwellenlänge aufweist. Erfindungsgemäß ist vorgesehen, dass das Verfahren weiterhin die Schritte aufweist: Bestimmen einer ersten Auswahl, wobei zumindest für jeden Objektpunkt aus der ersten Auswahl jeweils das Intensitätssignal der ersten Objekterfassung kleiner ist als ein Intensitätssignalschwellenwert oder für jeden Objektpunkt aus der ersten Auswahl jeweils ein für die erste Objekterfassung zu erwartendes Intensitätssignal kleiner ist als der Intensitätssignalschwellenwert, und während einer zweiten Objekterfassung, Beleuchten der ersten Auswahl von Objektpunkten auf der Oberfläche des Prüfobjekts mit der Anregungsstrahlung mit einer zweiten Anregungsintensität, Erfassen der Intensität der Lumineszenzstrahlung für mindestens einen Bildpunkt mit einer zweiten Erfassungsempfindlichkeit, wobei die Lumineszenzstrahlung jedes Bildpunkts jeweils von einem aus der ersten Auswahl von Objektpunkten abgestrahlt wird, und Ausgeben jeweils eines Intensitätssignals für die erste Auswahl von Objektpunkten, und Erzeugen eines ersten Bilds der Oberfläche des Objekts mit den Intensitätssignalen aus der zweiten Objekterfassung der ersten Auswahl von Objektpunkten, wobei die zweite Objekterfassung zumindest teilweise zeitlich nach der ersten Objekterfassung erfolgt und wobei für jeden Objektpunkt aus der ersten Auswahl zumindest die zweite Intensität der Lumineszenzstrahlung größer ist als die erste Intensität der Lumineszenzstrahlung oder die zweite Intensität der Lumineszenzstrahlung größer als die für den jeweiligen Objektpunkt in der ersten Objekterfassung zu erwartende erste Intensität der Lumineszenzstrahlung oder die zweite Erfassungsempfindlichkeit größer ist als die erste Erfassungsempfindlichkeit.

## Beschreibung

Die vorliegende Erfindung betrifft ein Verfahren zum Prüfen einer Oberfläche eines Prüfobjekts mit den Schritten: während einer ersten Objekterfassung, Beleuchten einer Mehrzahl von Objektpunkten auf der Oberfläche des Prüfobjekts mit elektromagnetischer Anregungsstrahlung mit einer Anregungswellenlänge und einer ersten Anregungsintensität, Erfassen jeweils einer Intensität einer elektromagnetischen Lumineszenzstrahlung für eine Mehrzahl von Bildpunkten mit einer ersten Erfassungsempfindlichkeit, wobei die Lumineszenzstrahlung eines Bildpunkts jeweils von einem Objektpunkt aus der Mehrzahl von Objektpunkten abgestrahlt wird, und Ausgeben jeweils eines Intensitätssignals für jeden aus der Mehrzahl von Bildpunkten, wobei das Intensitätssignal die Intensität der Lumineszenzstrahlung des jeweiligen Objektpunkts repräsentiert und wobei die Lumineszenzstrahlung eine von der Anregungswellenlänge verschiedenen Lumineszenzwellenlänge aufweist.

Darüber hinaus betrifft die vorliegende Erfindung ein System zum Prüfen einer Oberfläche eines Prüfobjekts mit einer Strahlungsquelle, wobei die Strahlungsquelle derart eingerichtet ist, dass die Strahlungsquelle in einem Betrieb des Systems elektromagnetische Anregungsstrahlung mit einer Anregungswellenlänge erzeugt und abstrahlt, einer Beleuchtungseinrichtung, wobei die Beleuchtungseinrichtung derart angeordnet und eingerichtet ist, dass mit der Beleuchtungseinrichtung in dem Betrieb des Systems die Anregungsstrahlung auf eine Mehrzahl von Objektpunkten auf der Oberfläche des Prüfobjekts ablenkbar ist, einem Detektor, wobei der Detektor derart angeordnet und eingerichtet ist, dass der Detektor in dem Betrieb des Systems jeweils eine Intensität der elektromagnetischen Lumineszenzstrahlung für eine Mehrzahl von Bildpunkten mit einer ersten Erfassungsempfindlichkeit erfasst, wobei die Lumineszenzstrahlung eines Bildpunkts jeweils von einem aus der Mehrzahl von Objektpunkten abgestrahlt wird, und wobei die Lumineszenzstrahlung eine von der Anregungswellenlänge verschiedene Lumineszenzwellenlänge aufweist, und einer Steuer- und Auswerteeinrichtung, wobei die Steuer- und Auswerteeinrichtung derart wirksam mit dem Detektor verbunden ist, dass in dem Betrieb des Systems die Steuer- und Auswerteeinrichtung von dem Detektor jeweils ein Intensitätssignal für jeden aus der Mehrzahl von Bildpunkten empfängt, wobei das Intensitätssignal die Intensität der Lumineszenzstrahlung des jeweiligen Objektpunkts repräsentiert, wobei die Steuer- und Auswerteeinrichtung derart wirksam zumindest mit der Strahlungsquelle oder der Beleuchtungseinrichtung verbunden ist, dass in dem Betrieb des Systems zumindest die Strahlungsquelle oder die Beleuchtungseinrichtung ein Steuersignal von der Steuer- und Auswerteeinrichtung empfängt, und wobei die Steuer- und Auswerteeinrichtung derart eingerichtet ist, dass sie in dem Betrieb des Systems für eine erste Objekterfassung das Steuersignal derart erzeugt, dass eine Mehrzahl von Objektpunkten auf der Oberfläche des Prüfobjekts mit der Anregungsstrahlung mit einer ersten Anregungsintensität beleuchtet wird.

Fluoreszenzscanner, insbesondere Fluoreszenzlaserscanner werden in der Mess- und Prüftechnik zum ortsaufgelösten Prüfen der Oberfläche eines Prüfobjekts bereits für eine Vielzahl von Anwendungsszenarien eingesetzt. Beispielsweise kann mit einem Fluoreszenzlaserscanner eine Restverunreinigung in Form eines Films auf der Oberfläche ortsaufgelöst erfasst werden oder die Dicke einer organischen Beschichtung oder einer Ölauflage auf der Oberfläche ortsaufgelöst bestimmt werden.

Bei einem Fluoreszenzlaserscanner wird ein Laserstrahl mit Hilfe eines um eine oder mehrere Achsen verschwenkbaren Spiegels über die Oberfläche des Prüfobjekts gerastert. Die Laserstrahlung regt je nach Anwendungsfall die Oberfläche des Prüfobjekts oder eine Substanz auf der Oberfläche, insbesondere eine Verunreinigung oder Beschichtung, zur Fluoreszenz an. Die Fluoreszenzstrahlung wird mit einem Detektor erfasst und die Intensität der Fluoreszenzstrahlung bildet ein Maß für das Vorhandensein einer Substanz auf der Oberfläche des Prüflings. Insbesondere ist die Intensität der Fluoreszenzstrahlung zumeist direkt proportional zu einer Dicke einer Schicht der Substanz auf der zu prüfenden Oberfläche.

In den meisten Anwendungen wird die Oberfläche des Prüfobjekts gerastert bzw. gescannt, wobei die Anregungsstrahlung eine Mehrzahl von Objektpunkten auf der Oberfläche des Prüfobjekts seriell nacheinander beleuchtet, sodass ein Detektor die Intensität für die jeweiligen Bildpunkte eines ortsaufgelösten Bildes der von der Oberfläche des Prüfobjekts bzw. einer Substanz auf dieser Oberfläche abgestrahlten Fluoreszenzstrahlung ebenfalls seriell erfasst.

Es hat sich herausgestellt, dass das geschilderte Messverfahren und ein dafür vorgesehenes System dann an ihre Grenzen geraten, wenn die Oberfläche des Prüfobjekts selbst oder die Substanz auf der Oberfläche sehr inhomogen ist. Die zum Erfassen der Fluoreszenzstrahlung zur Verfügung stehenden Detektoren weisen nur einen begrenzten Dynamikbereich auf, sodass zum Vermeiden einer Sättigung des Detektors oder gar einer Beschädigung des Detektors das System für inhomogene Prüfobjekte nur mit einem vergleichsweise kleinen, von dem Detektor in Abhängigkeit von der Intensität der Lumineszenzstrahlung erzeugten Intensitätssignal betrieben werden kann. Dies führt aber zu einer erhöhten Untergrenze des mit dem System erreichten Messintervalls für die zu erfassende Fluoreszenzstrahlung.

Demgegenüber ist es eine Aufgabe der vorliegenden Erfindung, ein Verfahren und ein System zum Prüfen einer Oberfläche eines Prüfobjekts bereitzustellen, welche die genannten Nachteile vermeiden.

Diese Aufgabe wird erfindungsgemäß durch ein Verfahren nach dem beigefügten unabhängigen Anspruch 1 gelöst. Dazu weist das Verfahren der eingangs genannten Art weiterhin die Schritte auf: Bestimmen einer ersten Auswahl, wobei zumindest für jeden Objektpunkt aus der ersten Auswahl jeweils das Intensitätssignal der ersten Objekterfassung kleiner ist als ein Intensitätssignalschwellenwert oder für jeden Objektpunkt aus der ersten Auswahl jeweils ein für die erste Objekterfassung zu erwartendes Intensitätssignal kleiner ist als der Intensitätssignalschwellenwert, und während einer zweiten Objekterfassung, Beleuchten der ersten Auswahl von Objektpunkten auf der Oberfläche des Prüfobjekts mit der Anregungsstrahlung mit einer zweiten Anregungsintensität, Erfassen der Intensität der Lumineszenzstrahlung für mindestens einen Bildpunkt mit einer zweiten Erfassungsempfindlichkeit, wobei die Lumineszenzstrahlung jedes Bildpunkts jeweils von einem aus der ersten Auswahl von Objektpunkten abgestrahlt wird, und Ausgeben jeweils eines Intensitätssignals für die erste Auswahl von Objektpunkten, und Erzeugen eines ersten Bilds der Oberfläche des Objekts mit den Intensitätssignalen aus der zweiten Objekterfassung der ersten Auswahl von Objektpunkten, wobei die zweite Objekterfassung zumindest teilweise zeitlich nach der ersten Objekterfassung erfolgt und wobei für jeden Objektpunkt aus der ersten Auswahl zumindest die zweite Intensität der Lumineszenzstrahlung größer ist als die erste Intensität der Lumineszenzstrahlung oder die zweite Intensität der Lumineszenzstrahlung größer als die für den jeweiligen Objektpunkt in der ersten Objekterfassung zu erwartende erste Intensität der Lumineszenzstrahlung oder die zweite Erfassungsempfindlichkeit größer ist als die erste Erfassungsempfindlichkeit.

Es ist die der Erfindung zugrundeliegende Idee, während der ersten Objekterfassung diejenigen Objektpunkte oder Bereiche von Objektpunkten auf der Oberfläche des Prüfobjekts zu identifizieren, welche in der Lage sein könnten, Lumineszenzstrahlung mit einer Intensität zu erzeugen, die den Detektor in die Sättigung treibt oder gar nachhaltig beschädigt. Die erste Objekterfassung erfolgt daher in einer Ausführungsform so, dass die zu erwartende Intensität der Lumineszenzstrahlung auf dem Detektor von allen Objektpunkten den Detektor nicht sättigt oder beschädigt. Dies führt jedoch dazu, dass die tatsächlich zu erfassenden Merkmale, z.B. eine Beschichtung, Auflage oder Verunreinigung, nicht oder nicht vollständig erfasst werden, da die Intensität der Lumineszenzstrahlung unterhalb der Untergrenze des Messintervalls des Detektors liegt oder im Rauschen untergeht.

Für die zweite Objekterfassung wird daher in einer ersten Ausführungsform eine erste Auswahl von Objektpunkten aus der Mehrzahl von Objektpunkten bestimmt, wobei für diese erste Auswahl das Intensitätssignal jedes Objektpunkts während der ersten Objekterfassung kleiner war als ein vorgegebener Intensitätssignalschwellenwert. In dieser Ausführungsform bilden die Objektpunkte der ersten Auswahl eine Teilmenge der Mehrzahl von Objektpunkten der ersten Objekterfassung. Diese erste Auswahl von Objektpunkten aus der Mehrzahl von Objektpunkten wird in dieser Ausführungsform während der zweiten Objekterfassung erneut geprüft. Dabei wird die Oberfläche erneut gescannt und die Lumineszenzstrahlung für die erste Auswahl von Objektpunkten erfasst, wobei die Objektpunkte der ersten Auswahl von Objektpunkten bei der zweiten Objekterfassung zu einem höheren Intensitätssignal führen sollen als während der ersten Objekterfassung. Letzteres ist möglich, da während der ersten Objekterfassung verifiziert wurde, dass die erste Auswahl von Objektpunkten Lumineszenzstrahlung vergleichsweise geringer Intensität erzeugt, für die keine Gefahr der Sättigung oder Beschädigung des Detektors besteht.

Mit anderen Worten ausgedrückt, ist in einer solchen Ausführungsform jeder der Objektpunkte aus der ersten Auswahl identisch mit oder im Wesentlichen identisch mit genau einem Objektpunkt, der während der ersten Objekterfassung erfasst wurde. Dabei bedeutet im Wesentlichen identisch eine Identität im Rahmen der Reproduzierbarkeit einer Strahlablenkung während dem Beleuchten der Mehrzahl von Objektpunkten.

In einer weiteren Ausführungsform umfasst die erste Auswahl von Objektpunkten alle Objektpunkte, für welche jeweils das Intensitätssignal während der ersten Objekterfassung kleiner war als der vorgegebene Intensitätssignalschwellenwert und zusätzlich zumindest einen weiteren Objektpunkt, für den erwartet werden kann, dass für diesen weiteren Objektpunkt das Intensitätssignal während der ersten Objekterfassung, d.h. unter den Bedingungen der ersten Objekterfassung, kleiner gewesen wäre als der vorgegebene Intensitätssignalschwellenwert. Vorzugsweise umfasst die erste Auswahl eine Mehrzahl von solchen zusätzlichen Objektpunkten. In einer solchen Ausführungsform haben die Mehrzahl von Objektpunkten der ersten Objekterfassung und die erste Auswahl von Objektpunkten eine Schnittmenge, wobei die erste Auswahl zusätzliche Objektpunkte umfasst, die während der ersten Objekterfassung nicht erfasst wurden. Auf diese Weise kann die örtliche Auflösung der zweiten Objekterfassung gegenüber der ersten Objekterfassung erhöht werden. Für die zusätzlichen Objektpunkte der zweiten Objekterfassung werden die Intensitätssignale der Objektpunkte der ersten Objekterfassung in einer Ausführungsform zumindest interpoliert oder extrapoliert.

In einer alternativen Ausführungsform umfasst die erste Auswahl ausschließlich eine oder mehrere Objektpunkte, für die erwartet werden kann, dass für diese(n) das Intensitätssignal während der ersten Objekterfassung, d.h. unter den Bedingungen der ersten Objekterfassung, kleiner gewesen wäre als der vorgegebene Intensitätssignalschwellenwert. Für die Objektpunkte der derart gebildeten ersten Auswahl werden die Intensitätssignale der Objektpunkte der ersten Objekterfassung zumindest interpoliert oder extrapoliert.

Mit anderen Worten beschrieben, werden erfindungsgemäß während der zweiten Objekterfassung diejenigen Objektpunkte maskiert, für die das Intensitätssignal bei der ersten Objekterfassung größer war als der Intensitätssignalschwellenwert oder für die das zu erwartende Intensitätssignal unter den Bedingungen der ersten Objekterfassung größer gewesen wäre als der Intensitätssignalschwellenwert. Wie mit den maskierten Objektpunkten, die nicht zu der Teilmenge von Objektpunkten der ersten Auswahl gehören, verfahren wird, wird an anderer Stelle in diesem Text beschrieben.

Ein Beispiel für eine Anwendung des erfindungsgemäßen Verfahrens ist ein Prüfobjekt mit einer Oberfläche mit einem ersten Material und einem zweiten Material, wobei das erste Material eine höhere Fluoreszenz bei der Anregungswellenlänge zeigt als das zweite Material. Dabei wird für das Beispiel davon ausgegangen, dass das zweite Material keine Fluoreszenz bei der Anregungswellenlänge zeigt. Aufgabe der Prüfung ist es in diesem Beispiel, eine fluoreszierende Substanz in Form einer Beschichtung oder aber einer Verunreinigung auf der Oberfläche des zweiten Materials zu erfassen. Während der ersten Objekterfassung erzeugen die Bereiche der Oberfläche mit dem ersten Material Lumineszenzstrahlung mit hoher Intensität. Demgegenüber ist bei der ersten Objekterfassung die Substanz, d.h. die Verunreinigung oder Beschichtung, auf dem zweiten Material nicht oder nur sehr schlecht erkennbar, da die Intensität der Fluoreszenz der Beschichtung oder Verunreinigung verglichen mit dem ersten Material klein ist. Bei der zweiten Objekterfassung wird daher nur gezielt derjenige Bereich der Oberfläche des Prüfobjekts mit dem zweiten Material erfasst, wobei aber ein größeres Intensitätssignal für alle Objektpunkte dieser ersten Auswahl generiert wird, beispielsweise durch Erhöhen der Erfassungsempfindlichkeit des Detektors. In diesem Beispiel liegen alle Objektpunkte der ersten Auswahl im Bereich der Oberfläche des Prüfobjekts mit dem zweiten Material.

Ein konkretes Beispiel für eine solche Prüfsituation ist die Kontrolle der Abisolierung eines ansonsten elektrisch mit einer Kunststoffisolierung isolierten elektrischen Leiters. Während der isolierende Kunststoff eine starke Fluoreszenz zeigt, sollen kleinste Rückstände eines Trennmittels im abisolierten Bereich erfasst werden. Insbesondere im Bereich des Übergangs zwischen isoliertem und abisoliertem Bereich droht ohne das erfindungsgemäße Verfahren eine Sättigung des Detektors.

In der vorliegenden Anmeldung wird Lumineszenzstrahlung als Oberbegriff verwendet, der elektromagnetische Strahlung umfasst, die durch Fluoreszenzprozesse oder durch Phosphoreszenzprozesse generiert wird.

Die Fluoreszenzwellenlänge ist in einer Ausführungsform Bestandteil eines Fluoreszenzwellenlängenbereichs mit einer Bandbreite. Beispielweise ist die Fluoreszenzwellenlänge die Schwerpunktswellenlänge eines Fluoreszenzwellenlängenbereichs.

Es versteht sich, dass die Anregungswellenlänge so zu wählen ist, dass sie innerhalb der Absorptionswellenlängen des zu untersuchenden Stoffes in oder auf der Oberfläche des Prüfobjekts liegt, die zu einer Fluoreszenz des zu untersuchenden Stoffes führen.

Ebenso versteht es sich, dass der Detektor so auszugestalten ist, dass er für die von dem Prüfobjekt abgestrahlte Lumineszenzstrahlung sensitiv ist.

Die Anregungsstrahlung ist typischerweise schmalbandig. Typischerweise ist die Bandbreite der Anregungsstrahlung schmalbandiger als die Bandbreite der Fluoreszenzstrahlung. Dennoch ist die Anregungswellenlänge in einer Ausführungsform Bestandteil eines Anregungswellenlängenbereichs mit einer Bandbreite. Beispielweise ist die Anregungswellenlänge die Schwerpunktswellenlänge eines Anregungswellenlängenbereichs.

Zur Realisierung der Erfindung genügt es, wenn der Anregungswellenlängenbereich und der Fluoreszenzwellenlängenbereich nicht vollständig überlappen. Auch dann ist die Lumineszenzwellenlänge von der Anregungswellenlänge verschieden.

In einer Ausführungsform der Erfindung ist der Intensitätssignalschwellenwert derart gewählt, dass die Objektpunkte der ersten Auswahl von Objektpunkten nur solche sind, die bei der zweiten Objekterfassung den Detektor nicht in die Sättigung treiben oder gar beschädigen.

Um ein größeres Intensitätssignal für die Lumineszenzstrahlung während der zweiten Objekterfassung der Objektpunkte aus der ersten Auswahl zu erhalten, gibt es eine Reihe Möglichkeiten, die alternativ oder kumulativ genutzt werden können.

In einer Ausführungsform der Erfindung ist die zweite Erfassungsempfindlichkeit größer als die erste Erfassungsempfindlichkeit. Die Erfassungsempfindlichkeit des Detektors lässt sich beispielsweise dadurch variieren, dass eine Signalverstärkung des Detektors geändert wird. Ist der Detektor ein Photomultiplier (auch Photoelektronenvervielfacher, engl. photomultiplier tube, kurz PMT) so lässt sich die Erfassungsempfindlichkeit unmittelbar durch Ändern des Verstärkungsfaktors des PMT einstellen.

In einer Ausführungsform der Erfindung ist die zweite Intensität der Lumineszenzstrahlung größer als die erste Intensität der Lumineszenzstrahlung. Auch dies führt zu einem höheren Intensitätssignal für jeden der Objektpunkte aus der ersten Auswahl. Dabei ist in einer Ausführungsform der Erfindung die zweite Anregungsintensität größer als die erste Anregungsintensität. Eine Erhöhung der Anregungsintensität am gleichen Objektpunkt führt zu einer Erhöhung des Intensitätssignals der Lumineszenzstrahlung.

In einer Ausführungsform der Erfindung wird die Lumineszenzstrahlung vor dem Detektor abgeschwächt. Ist diese Abschwächung einstellbar variabel, so kann auch auf diese Weise bewirkt werden, dass die zweite Intensität der Lumineszenzstrahlung größer ist als die erste Intensität der Lumineszenzstrahlung.

In einer Ausführungsform der Erfindung wird die Lumineszenzstrahlung eines Bildpunkts jeweils von genau einem aus der Mehrzahl von Objektpunkten abgestrahlt. Mit anderen Worten ausgedrückt, gibt es eine 1:1 Abbildung der Mehrzahl von Objektpunkten auf die Mehrzahl von Bildpunkten. Gleiches gilt in einer Ausführungsform für die Objektpunkte der ersten Auswahl.

Grundsätzlich ist es möglich, mit einem geeigneten Detektor mit einer Mehrzahl von Pixeln gleichzeitig eine Mehrzahl von Bildpunkten zu einer Mehrzahl von Objektpunkten aufzunehmen. In einer Ausführungsform jedoch umfasst der Detektor genau ein Pixel, sodass jeweils nur ein Bildpunkt aufgenommen werden kann. Ein solcher Detektor wird auch als Punktdetektor bezeichnet. In einer solchen Ausführungsform sind sowohl die erste Objekterfassung als auch die zweite Objekterfassung vollständig seriell und es wird immer nur genau ein Objektpunkt einer Bilderfassung zu einem Zeitpunkt beleuchtet und dazu genau ein Bildpunkt zu einem Zeitpunkt generiert.

In einer Ausführungsform der Erfindung ist die erste Erfassungsempfindlichkeit für alle Objektpunkte, für die ein Bildpunkt während der ersten Objekterfassung erzeugt wird, gleich. In einer Ausführungsform der Erfindung ist die zweite Erfassungsempfindlichkeit für alle Objektpunkte aus der ersten Auswahl von Objektpunkten gleich.

In einer Ausführungsform der Erfindung ist die erste Anregungsintensität für alle aus der Mehrzahl von Objektpunkten gleich. In einer Ausführungsform der Erfindung ist die zweite Anregungsintensität für alle Objektpunkte aus der ersten Auswahl von Objektpunkten gleich.

In einer Ausführungsform umfasst die erste Auswahl nur einen einzigen Objektpunkt. Typischerweise aber weist die erste Auswahl von Objektpunkten eine Mehrzahl von Objektpunkten auf.

In einem Fall, in dem die erste Auswahl alle Objektpunkte aus der Mehrzahl von Objektpunkten der ersten Objekterfassung umfasst, könnten alle Objektpunkte in der zweiten Objekterfassung mit einem höheren Intensitätssignal erfasst werden. Typischerweise werden bei der zweiten Objekterfassung aber nicht alle Bereiche, die während der ersten Objekterfassung erfasst wurden, erneut erfasst.

Bedeckt die erste Auswahl von Objektpunkten eine kleinere Fläche als während der ersten Objekterfassung erfasst wurde, so gibt es verschiedene Möglichkeiten, mit der Restmenge von Objektpunkten, die nicht in der ersten Auswahl enthalten sind, umzugehen.

In einer Ausführungsform der Erfindung umfasst daher das Verfahren weiterhin den Schritt: Bestimmen einer zweiten Auswahl von Objektpunkten, wobei zumindest für jeden Objektpunkt aus der zweiten Auswahl jeweils das Intensitätssignal größer ist als der Intensitätssignalschwellenwert oder für jeden Objektpunkt aus der zweiten Auswahl jeweils das zu erwartende Intensitätssignal größer ist als der Intensitätssignalschwellenwert.

Analog wie zuvor für die Objektpunkte der ersten Auswahl beschrieben, können die Objektpunkte der zweiten Auswahl mit den Objektpunkten der Mehrzahl von Objektpunkten der ersten Objekterfassung identisch sein, für die während der ersten Objekterfassung jeweils das Intensitätssignal größer war als der Intensitätssignalschwellenwert. In einer weiteren Ausführungsform umfasst die zweite Auswahl von Objektpunkten alle Objektpunkte, für welche jeweils das Intensitätssignal während der ersten Objekterfassung größer war als der vorgegebene Intensitätssignalschwellenwert und zusätzlich zumindest einen weiteren Objektpunkt, für den erwartet werden kann, dass für diesen das Intensitätssignal während der ersten Objekterfassung, d.h. unter den Bedingungen der ersten Objekterfassung, größer gewesen wäre als der vorgegebene Intensitätssignalschwellenwert.

In einer alternativen Ausführungsform umfasst die zweite Auswahl ausschließlich einen oder mehrere Objektpunkte, für die erwartet werden kann, dass für diese(n) das Intensitätssignal während der ersten Objekterfassung, d.h. unter den Bedingungen der ersten Objekterfassung, größer gewesen wäre als der vorgegebene Intensitätssignalschwellenwert.

In einer Ausführungsform der Erfindung werden die Objektpunkte der zweiten Auswahl während der zweiten Objekterfassung nicht mit der Anregungsstrahlung beleuchtet.

In einer Ausführungsform wird dazu der Strahlpfad der Anregungsstrahlung während der zweiten Objekterfassung nur auf die Objektpunkte der ersten Auswahl abgelenkt. Das heißt die Beleuchtungseinrichtung wird so angesteuert, dass der Strahlpfad für die Anregungsstrahlung nur die Objektpunkte der ersten Auswahl abtastet. Eine solche Variante reduziert die Messzeit der zweiten Objekterfassung verglichen mit der ersten Objekterfassung.

In einer alternativen Ausführungsform lenkt eine Ablenkeinheit den Strahlengang der Anregungsstrahlung derart ab, dass alle Objektpunkte der ersten und der zweiten Auswahl während der zweiten Objekterfassung mit dem Strahlengang abgetastet werden. In einer Ausführungsform wird dabei die Strahlungsquelle für die Anregungsstrahlung allerdings nur bei der Abtastung der Objektpunkte der ersten Auswahl eingeschaltet. Für die zweite Auswahl ist die Anregungsleistung dann Null. In einer Ausführungsform wird die zweite Erfassungsempfindlichkeit für die zweite Auswahl auf Null gesetzt, beispielsweise durch Ausschalten des Detektors. Dies setzt beispielsweise eine schnell zu modulierende Strahlungsquelle für die Anregungsstrahlung oder einen schnell schaltbaren Detektor voraus. In einer solchen Variante ist der Steueraufwand für die Beleuchtungsoptik deutlich reduziert.

In einer alternativen Ausführungsform werden die Objektpunkte der zweiten Auswahl während der zweiten Objekterfassung mit der Anregungsstrahlung mit einer von Null verschiedenen dritten Anregungsintensität beleuchtet. Die Intensität der Lumineszenzstrahlung wird für jeden aus der zweiten Auswahl von Objektpunkten mit einer dritten Erfassungsempfindlichkeit erfasst, wobei die Lumineszenzstrahlung jeweils von einem aus der zweiten Auswahl von Objektpunkten abgestrahlt wird.

Dabei ist zumindest die dritte Erfassungsempfindlichkeit kleiner als die zweite Erfassungsempfindlichkeit oder die Intensität der Lumineszenzstrahlung ist für jeden aus der zweiten Auswahl von Objektpunkten kleiner als ein Intensitätsschwellenwert. Dieser Intensitätsschwellenwert ist so gewählt, dass auch bei der zweiten Objekterfassung der zweiten Auswahl von Objektpunkten der Detektor nicht gesättigt oder beschädigt wird.

Während die zweite Auswahl von Objektpunkten nur einen einzigen Objektpunkt umfassen kann, weist die zweite Auswahl von Objektpunkten typischerweise eine Mehrzahl von Objektpunkten auf.

Es versteht sich, dass in einer solchen Ausführungsform die dritte Anregungsintensität von Null verschieden ist. In einer Ausführungsform der Erfindung ist die dritte Anregungsintensität kleiner oder gleich der ersten Anregungsintensität, vorzugsweise aber kleiner als die erste Anregungsintensität.

In einer Ausführungsform der Erfindung ist die dritte Erfassungsempfindlichkeit kleiner oder gleich der ersten Erfassungsempfindlichkeit, vorzugsweise aber kleiner als die erste Erfassungsempfindlichkeit.

Während in den meisten Fällen eine Kategorisierung der Mehrzahl von Objektpunkten der ersten Objekterfassung in die erste Auswahl und die zweite Auswahl ausreichend ist, ist eine Ausführungsform möglich, bei der die Objektpunkte in mindestens drei Auswahlen von Objektpunkten anhand von mindestens zwei verschiedenen Intensitätsschwellenwerten eingeteilt werden.

In einer Ausführungsform der Erfindung werden die Objektpunkte in einer Anordnung aus Zeilen und Spalten abgetastet. Eine solche Abtastung wird auch als 2D-Abtastung bezeichnet. Eine solche Abtastung kann beispielsweise mit einem um zwei Achsen verschwenkbaren Spiegel bereitgestellt werden, der die Anregungsstrahlung von der Strahlungsquelle auf die Oberfläche des Prüfobjekts ablenkt.

In einer alternativen Ausführungsform werden die Objektpunkte nur entlang einer Zeile abgetastet, während vorzugsweise das Prüfobjekt, vorzugsweise senkrecht zu der Zeile bewegt wird. Eine solche Abtastung wird als 1D-Abtastung bezeichnet, die zweite Dimension des Bildes wird durch eine Relativbewegung zwischen der Abtastzeile und dem Prüfobjekt generiert. In einer Ausführungsform mit einer Abtastung der Objektpunkte in nur einen einzigen Zeile, weist das System einen zweiten Detektor, vorzugsweise eine Anordnung mit einer zweiten Beleuchtungseinrichtung und einem zweiten Detektor und optional mit einer zweiten Strahlungsquelle auf.

In einer Ausführungsform der Erfindung ist die Abtastung aller Objektpunkte während der ersten Objekterfassung vollständig abgeschlossen bevor die zweite Objekterfassung beginnt.

In einer alternativen Ausführungsform finden die erste Objekterfassung und die zweite Objekterfassung teilweise zeitgleich statt, wobei gewährleistet sein muss, dass für jeden Objektpunkt die erste Objekterfassung abgeschlossen ist, bevor gegebenenfalls für diesen Objektpunkt die zweite Objekterfassung beginnt. Eine solche Ausführungsform mit einer teilweisen zeitlichen Parallelität der ersten und der zweiten Objekterfassung spart insgesamt Messzeit, während für jeden einzelnen Objektpunkt die Bestimmung, ob er zur ersten Auswahl gehört oder nicht, dennoch möglich ist.

Eine solche teilweise zeitliche Parallelität der ersten und der zweiten Objekterfassung ist insbesondere bei einer ausschließlich zeilenförmigen Abtastung der Objektpunkte mit der Anregungsstrahlung bei gleichzeitiger Bewegung des Prüfobjekts in einer zu der Zeile senkrechten Richtung zweckmäßig.

In einer Ausführungsform erfolgt für jeden Objektpunkt aus der ersten Auswahl die zweite Objekterfassung zeitlich nach dem Erfassen dieses Objektpunkts während der ersten Objekterfassung.

In einer Ausführungsform der Erfindung, in der die Objektpunkte zeitlich nacheinander abgetastet werden, wird für jeden Objektpunkt die erste Objekterfassung und zumindest für jeden Objektpunkt aus der ersten Auswahl die zweite Objekterfassung durchgeführt, bevor der nächste Objektpunkt abgetastet wird.

In einer Ausführungsform der Erfindung umfasst das Bild der Oberfläche des Objekts neben den Intensitätssignalen der Bildpunkte für die Objektpunkte aus der ersten Auswahl von Objektpunkten auch die Intensitätssignale der Objektpunkte aus der zweiten Auswahl von Objektpunkten. Dabei können für die zweite Auswahl von Objektpunkten die Intensitätssignale der ersten Objekterfassung oder die Intensitätssignale der zweiten Objekterfassung verwendet werden.

Darüber hinaus wird die zuvor genannte Aufgabe auch durch ein Verfahren zum Herstellen eines Industrieprodukts gelöst, wobei das Verfahren die Schritte aufweist: Bereitstellen eines Rohstoffs, eines Rohlings oder eines Halbzeugs, Bearbeiten des Rohstoffs, des Rohlings oder des Halbzeugs, sodass das Industrieprodukt erzeugt wird, und Prüfen des Industrieprodukts mit dem Verfahren gemäß einer der zuvor beschriebenen Ausführungsformen, wobei das Industrieprodukt das Prüfobjekt ist.

Dabei wird unter einem Bearbeiten des Rohstoffs, des Rohlings oder des Halbzeugs ein Urformen, Umformen, Trennen, Fügen, Beschichten oder Ändern der Stoffeigenschaft des Rohstoffs, des Rohlings oder des Halbzeugs verstanden.

Zudem wird die zuvor genannte Aufgabe auch durch ein System gemäß dem darauf gerichteten unabhängigen Anspruch gelöst. Dazu ist die Steuer- und Auswerteeinrichtung des Systems der eingangs genannten Art derart eingerichtet, dass sie in dem Betrieb des Systems eine erste Auswahl von Objektpunkten bestimmt, wobei zumindest für jeden Objektpunkt aus der ersten Auswahl jeweils das Intensitätssignal der ersten Objekterfassung kleiner ist als ein Intensitätssignalschwellenwert oder für jeden Objektpunkt aus der ersten Auswahl jeweils ein für die erste Objekterfassung zu erwartendes Intensitätssignal kleiner ist als der Intensitätssignalschwellenwert, wobei die Steuer- und Auswerteeinrichtung ferner derart eingerichtet ist, dass sie in dem Betrieb des Systems für eine zweite Objekterfassung das Steuersignal derart erzeugt, dass die erste Auswahl von Objektpunkten auf der Oberfläche des Prüfobjekts mit der Anregungsstrahlung mit einer zweiten Anregungsintensität beleuchtet wird, die Intensität der Lumineszenzstrahlung für eine Mehrzahl von Bildpunkten mit einer zweiten Erfassungsempfindlichkeit erfasst wird, wobei die Lumineszenzstrahlung jedes aus der Mehrzahl von Bildpunkten jeweils von einem aus der ersten Auswahl von Objektpunkten abgestrahlt wird, und ein erstes Bild der Oberfläche des Objekts mit den Intensitätssignalen der ersten Auswahl von Objektpunkten erzeugt wird, wobei die zweite Objekterfassung zumindest teilweise zeitlich nach der ersten Objekterfassung erfolgt und wobei für jeden Objektpunkt aus der ersten Auswahl zumindest die zweite Intensität der Lumineszenzstrahlung größer ist als die erste Intensität der Lumineszenzstrahlung oder die zweite Intensität der Lumineszenzstrahlung größer ist als die für den jeweiligen Objektpunkt in der ersten Objekterfassung zu erwartende erste Intensität der Lumineszenzstrahlung oder die zweite Erfassungsempfindlichkeit größer ist als die erste Erfassungsempfindlichkeit.

Soweit im Folgenden Aspekte der Erfindung im Hinblick auf das System beschrieben werden, so gelten diese auch für das entsprechende Verfahren zum Prüfen einer Oberfläche eines Prüfobjekts und umgekehrt. Soweit das Verfahren mit einem System gemäß dieser Erfindung ausgeführt wird, so weist diese die entsprechenden Einrichtungen hierfür auf. Insbesondere sind Ausführungsformen des Systems zum Ausführen der zuvor beschriebenen Ausführungsformen des Verfahrens geeignet.

In einer Ausführungsform der Erfindung ist der Detektor ein Photomultiplier, wobei die Erfassungsempfindlichkeit einer Verstärkung des Photomultipliers ist.

In einer weiteren Ausführungsform des erfindungsgemäßen Systems umfasst die Beleuchtungseinrichtung einen in dem Betrieb des Systems um eine Drehachse rotierenden Polygonspiegel, wobei die Strahlungsquelle und die Beleuchtungseinrichtung derart angeordnet und eingerichtet sind, dass eine erste Facette des Polygonspiegels von der Anregungsstrahlung der ersten Objekterfassung beleuchtet wird und die erste Facette oder eine zweite Facette des Polygonspiegels von der Anregungsstrahlung der zweiten Objekterfassung beleuchtet wird, sodass ein und derselbe Objektpunkt zeitlich nacheinander von der Anregungsstrahlung der ersten Objekterfassung und von der Anregungsstrahlung der zweiten Objekterfassung beleuchtet wird.

Ein solches System ermöglicht eine teilweise zeitlich parallel erste und zweite Objekterfassung mit einem vergleichsweise geringen apparativen Aufwand.

Weitere Vorteile, Merkmale und Anwendungsmöglichkeiten der vorliegenden Erfindung werden anhand der folgenden Beschreibung und einer Ausführungsform und der dazugehörigen Figuren deutlich. In den Figuren sind gleiche Elemente mit gleichen Bezugszeichen bezeichnet.
- Figur 1: ist eine schematische Darstellung einer Ausführungsform eines erfindungsgemäßen Systems zum Prüfen einer Oberfläche eines Prüfobjekts.
- Figur 2: ist eine schematische Draufsicht auf die Oberfläche des Prüfobjekts aus Figur 1.
- Figur 3: ist eine schematische Darstellung einer weiteren Ausführungsform des erfindungsgemäßen Systems zum Prüfen einer Oberfläche eines Prüfobjekts.

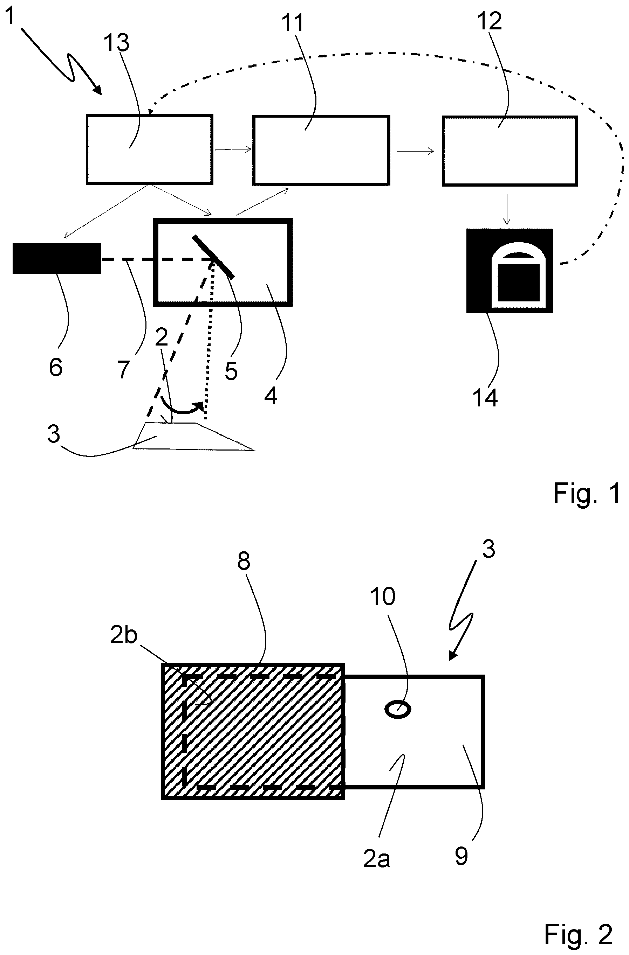

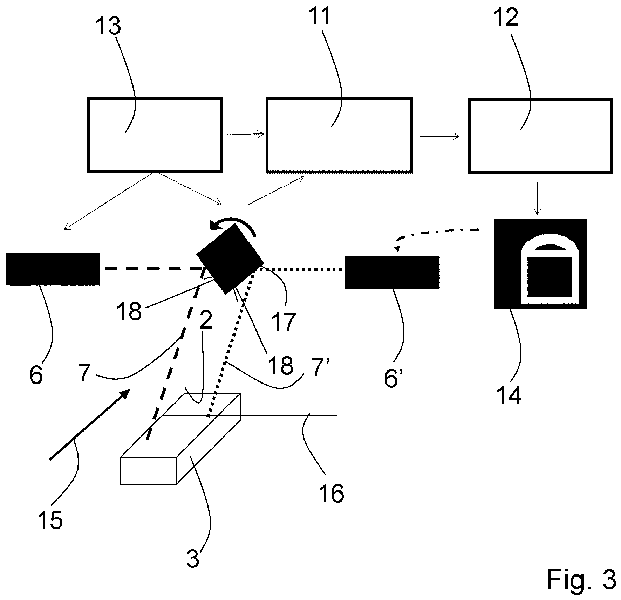

Figur 1 und 3 zeigen schematisch jeweils ein System 1 zum Prüfen einer Oberfläche 2 eines Prüfobjekts 3.

Das System 1 aus Figur 1 tastet die Oberfläche 2 mit von einem schnell schaltbaren Laser 6 als Strahlungsquelle generierter Anregungsstrahlung 7 ab. Dabei erfolgt die Abtastung der Objektpunkte auf der Oberfläche 2 mit Hilfe einer Beleuchtungseinrichtung 4 in zwei Dimensionen. Die Objektpunkte sind matrizenförmig in Reihen und Zeilen von Objektpunkten auf der Oberfläche angeordnet. Zu diesem Zweck umfasst die Beleuchtungseinrichtung 4 einen galvanisch um zwei zueinander senkrechte Achsen verkippbaren Schwenkspiegel 5 der die Anregungsstrahlung 4 von dem Laser 6 auf die Oberfläche 2 ablenkt.

In dem für Figur 1 betrachteten Beispiel ist das Prüfobjekt 3 der teilweise abisolierte Bereich eines sogenannten Hairpins eines Stators. Die zu betrachtende Oberfläche 2 des Prüfobjekts 3 ist schematisch in Figur 2 gezeigt. Eine erste Teilfläche 2a der Oberfläche 2 des Prüfobjekts 3 besteht aus dem Kupfer 9 eines elektrischen Leiters, d.h. ein zuvor dort vorhandenes Kunststoffmaterial 8 wurde entfernt. Auf der ersten Teilfläche 2a des Metalls verbleibt Trennmittel als Rückstand. Ein solcher Trennmittelrückstand ist in Figur 2 mit dem Bezugszeichen 10 bezeichnet. Dieser Rückstand 10 soll mit dem erfindungsgemäßen System und Verfahren erfasst werden. Eine zweite Teilfläche 2b der Oberfläche besteht aus dem Kunststoffmaterial einer Isolierung 8.

Die erste Teilfläche 2a des metallischen Abschnitts 9 des Prüfobjekts 3 ist bei der Anregungswellenlänge der Anregungsstrahlung 7 nicht fluoreszierend. Demgegenüber zeigt das Trennmittel, d.h. auch sein Rückstand 10, eine Fluoreszenz bei der Anregungswellenlänge der Anregungsstrahlung 7. In dem diskutierten Beispiel weist jedoch das Kunststoffmaterial 8, welches die erste Teilfläche 2a des Prüfobjekts 3 bildet, ebenfalls eine Fluoreszenz auf. Diese ist um eine Größenordnung größer als die Fluoreszenz des Trennmittelrückstands 10.

Erfasst man die von der Oberfläche 2 oder einer darauf angeordneten Verunreinigung 10 ausgehende Fluoreszenz bei der Anregung mit der Anregungsstrahlung 7, so kann man ein Fluoreszenzbild der Oberfläche 2 generieren.

Mit dem in Figur 1 gezeigten System 1 werden während einer ersten Objekterfassung beide Teilflächen 2a, 2b aus Kupfer und aus Kunststoff mit dem Strahl der Anregungsstrahlung 7 abgetastet. Die von der Oberfläche 2a, 2b bzw. der darauf vorhandenen Verunreinigung 10 abgestrahlte Lumineszenzstrahlung bei einer gegenüber der Anregungswellenlänge der Anregungsstrahlung 7 verschobenen Lumineszenzwellenlänge wird mit Hilfe eines Photomultipliers 11 als Detektor des Systems 1 erfasst.

Die Verstärkung des Photomultipliers 11 ist für die erste Objekterfassung so eingestellt, dass der Photomultiplier auch bei den erwarteten, stärksten Intensitäten der Lumineszenzstrahlung von der zweiten Teilfläche 2b weder geschädigt wird, noch in die Sättigung geht. Alle Objektpunkte werden seriell, d.h. zeitlich nacheinander, von der Anregungsstrahlung 7 beleuchtet. Entsprechend werden alle Bildpunkte mit Hilfe des Photomultipliers 11 zeitlich nacheinander erfasst. Aufgrund der gewählten mittleren Verstärkung ist in dieser Einstellung mit der ersten Objekterfassung die Verunreinigung 10 auf der metallischen Teilfläche 2a des Prüfobjekts 3 noch gar nicht zu erkennen. Die Intensität der von der Verunreinigung 10 abgestrahlten Lumineszenzstrahlung ist zu gering, um bei der gewählten Verstärkung ein hinreichendes Intensitätssignal zu generieren. Hingegen erzeugt die Kunststoffoberfläche des Prüfobjekts 3 ein deutliches Intensitätssignal für alle Objektpunkte dieser zweiten Teilfläche 2b.

Die Intensitätssignale für alle Objektpunkte auf der Oberfläche 2 des Prüfobjekts 3, die mit der Anregungsstrahlung 7 während der ersten Objekterfassung abgetastet werden, werden in einer Auswerteeinrichtung 12 mit einem Intensitätssignalschwellenwert verglichen. Aufgrund der starken Fluoreszenz des Kunststoffmaterials liegen die Intensitätssignale für alle Objektpunkte auf der Kunststoffoberfläche 2 über dem Intensitätssignalschwellenwert. Alle Objektpunkte mit einem Intensitätssignal, welches kleiner ist als der Intensitätssignalschwellenwert werden in einer ersten Auswahl von Objektpunkten zusammengefasst. Demgegenüber bilden alle Objektpunkte mit einem Intensitätssignal, das größer ist als der Intensitätssignalschwellenwert, eine zweite Auswahl von Objektpunkten. Auf diese Weise wird für eine zweite Objekterfassung eine logische Maske 14 generiert, die es einer Steuereinrichtung 13 ermöglicht, während einer zweiten Objekterfassung selektiv ausschließlich die erste, metallische Teilfläche 2a des Prüfobjekts 3 zu beleuchten. Die Steuereinrichtung 13 ist sowohl zum Steuern des galvanisch angetriebenen Spiegels 5 als auch zum Steuern des schaltbaren Lasers 6 vorgesehen und mit diesen verbunden.

In der gezeigten Ausführungsform wird der Spiegel 5 für die zweite Objekterfassung genauso bewegt wie für die erste Objekterfassung, sodass der Strahlengang der Anregungsstrahlung 7 auch bei der zweiten Objekterfassung die gesamte Oberfläche 2a und 2b des Prüfobjekts 3 überstreicht bzw. abtastet. Allerdings wird der Laser 6 selektiv geschaltet, sodass für alle Objektpunkte der zweiten Teilfläche 2b aus Kunststoff der Laser 6 ausgeschaltet ist, und nur Anregungsstrahlung auf die Objektpunkte der ersten, metallischen Teilfläche 2a gelangt. Gleichzeitig wird für alle Objektpunkte der ersten Auswahl, d.h. für alle Objektpunkte der ersten Teilfläche 2a die Verstärkung des Photomultipliers 11 erhöht. Mit dieser erhöhten Verstärkung ist dann die von der Verunreinigung 10 auf der metallischen Oberfläche 2b abgestrahlte Lumineszenzstrahlung erfassbar und die Verunreinigung in einem Lumineszenzbild darstellbar.

Die Ausführungsform aus Figur 3 unterscheidet sich von der Variante aus Figur 1 dadurch, dass die Anregungsstrahlung 7, 7` der Oberfläche 2 des Prüfobjekts 3 nur zeilenförmig überstreicht. Gleichzeitig wird das Prüfobjekt 3 in einer Bewegungsrichtung 15 senkrecht zu der Zeile 16 bewegt. Die Beleuchtungseinrichtung 4 umfasst einen um eine Drehachse rotierenden Polygonspiegel 17. In der gezeigten Konfiguration wird die Anregungsstrahlung 7, 7` von zwei Lasern 6, 6' generiert. Die von dem ersten Laser 6 generierte Anregungsstrahlung 7 wird ausschließlich für die erste Objekterfassung verwendet und die von dem zweiten Laser 6` generierte Anregungsstrahlung 7' wird ausschließlich für die zweite Objekterfassung verwendet.

In dem gezeigten Beispiel strahlt der zweite Laser 6' eine deutlich höhere Anregungsleistung der Anregungsstrahlung 7` ab als der erste Laser 6. Zudem ist der zweite Laser 6' schnell schaltbar. Die Steuereinrichtung 13 und die Auswerteeinrichtung 12 sind wie zuvor für die Ausführungsform aus Figur 1 beschrieben so programmiert, dass mit der zweiten Anregungsstrahlung 7` während der zweiten Objekterfassung nur die Objektpunkte der ersten Auswahl aus der Mehrzahl von Objektpunkten beleuchtet werden, für welche das Intensitätssignal der Lumineszenzstrahlung während der ersten Objekterfassung kleiner war als der Intensitätssignalschwellenwert. Die höhere Anregungsleistung des zweiten Lasers 6` führt dazu, dass bei der zweiten Objekterfassung für die Objektpunkte der ersten Auswahl jeweils höhere Intensitätssignale generiert werden als bei der Anregung mit der ersten Anregungsstrahlung 7 während der ersten Objekterfassung. Der zweite Laser 6' bleibt ausgeschaltet für alle Objektpunkte einer zweiten Auswahl von Objektpunkten, für die während der ersten Objekterfassung das Intensitätssignal größer war als der Intensitätssignalschwellenwert.

Obwohl die Ablenkung sowohl der ersten Anregungsstrahlung 6 als auch der zweiten Anregungsstrahlung 6' mit Hilfe des Polygonspiegels 17 nur zeilenweise erfolgt, wird auch mit dem System 1 aus Figur 3 ein vollständiges zweidimensionales Bild der Oberfläche 2 des Prüfobjekts 3 generiert, da sich das Prüfobjekt senkrecht zu der Zeile bewegt. Die Abtastbewegung der Strahlengänge der Anregungsstrahlung 7, 7` über die Zeile 16 ist schnell verglichen mit der Bewegungsgeschwindigkeit des Prüfobjekts 3. Die Zeilen der ersten Anregungsstrahlung 6 und der zweiten Anregungsstrahlung 7` sind in der Bewegungsrichtung derart gegeneinander versetzt, dass die zweite Anregungsstrahlung nur Bereiche überstreicht, die zuvor schon von der ersten Anregungsstrahlung 7 beleuchtet wurden. Zudem sind Strahlengänge der ersten und der zweiten Anregungsstrahlung in der Zeilenrichtung gegeneinander versetzt und die Drehgeschwindigkeit des Polygonspiegels 17 und die Translationsgeschwindigkeit des Prüfobjekts 3 sind derart aufeinander abgestimmt, dass ein und derselbe Objektpunkt einmal von dem Strahlengang der ersten Anregungsstrahlung 6 und zeitlich danach einmal von dem Strahlengang der zweiten Anregungsstrahlung 6` überstrichen wird.

Durch die Verwendung unterschiedlicher Facetten des gleichen Polygonspiegels 17 für das Ablenken der ersten und der zweiten Anregungsstrahlung 7, 7' sind die Zeilenbewegungen der ersten und der zweiten Anregungsstrahlung 7, 7` perfekt zueinander synchronisiert.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus, und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

### Bezugszeichenliste

- 1: System
- 2: Oberfläche
- 2a: erste Teilfläche
- 2b: zweite Teilfläche
- 3: Prüfobjekt
- 4: Beleuchtungseinrichtung
- 5: Schwenkspiegel
- 6, 6': Laser
- 7, 7`: Anregungsstrahlung
- 8: Isolierung
- 9: Kupfer
- 10: Verunreinigung
- 11: Photomultiplier
- 12: Auswerteeinrichtung
- 13: Steuereinrichtung
- 14: Maske
- 15: Bewegungsrichtung
- 16: Zeile
- 17: Polygonspiegel

## Patentansprüche

1. Verfahren zum Prüfen einer Oberfläche (2) eines Prüfobjekts (3) mit den Schritten:
während einer ersten Objekterfassung
Beleuchten einer Mehrzahl von Objektpunkten auf der Oberfläche (2) des Prüfobjekts (3) mit elektromagnetischer Anregungsstrahlung (7, 7') mit einer Anregungswellenlänge und einer ersten Anregungsintensität, Erfassen jeweils einer Intensität einer elektromagnetischen Lumineszenzstrahlung für eine Mehrzahl von Bildpunkten mit einer ersten Erfassungsempfindlichkeit, wobei die Lumineszenzstrahlung eines Bildpunkts jeweils von einem Objektpunkt aus der Mehrzahl von Objektpunkten abgestrahlt wird, und
Ausgeben jeweils eines Intensitätssignals für jeden aus der Mehrzahl von Bildpunkten, wobei das Intensitätssignal die Intensität der Lumineszenzstrahlung des jeweiligen Objektpunkts repräsentiert,
wobei die Lumineszenzstrahlung eine von der Anregungswellenlänge verschiedene Lumineszenzwellenlänge aufweist,
**dadurch gekennzeichnet, dass** das Verfahren weiterhin die Schritte aufweist
Bestimmen einer ersten Auswahl von Objektpunkten, wobei
zumindest für jeden Objektpunkt aus der ersten Auswahl jeweils das Intensitätssignal der ersten Objekterfassung kleiner ist als ein Intensitätssignalschwellenwert oder für jeden Objektpunkt aus der ersten Auswahl jeweils ein für die erste Objekterfassung zu erwartendes Intensitätssignal kleiner ist als der Intensitätssignalschwellenwert, und
während einer zweiten Objekterfassung
Beleuchten der ersten Auswahl von Objektpunkten auf der Oberfläche (2) des Prüfobjekts (3) mit der Anregungsstrahlung (7, 7') mit einer zweiten Anregungsintensität,
Erfassen der Intensität der Lumineszenzstrahlung für mindestens einen Bildpunkt mit einer zweiten Erfassungsempfindlichkeit, wobei die Lumineszenzstrahlung jedes Bildpunkts jeweils von einem aus der ersten Auswahl von Objektpunkten abgestrahlt wird, und
Ausgeben jeweils eines Intensitätssignals für die erste Auswahl von Objektpunkten, und
Erzeugen eines ersten Bilds der Oberfläche des Objekts mit den Intensitätssignalen aus der zweiten Objekterfassung der ersten Auswahl von Objektpunkten, wobei die zweite Objekterfassung zumindest teilweise zeitlich nach der ersten Objekterfassung erfolgt und
wobei für jeden Objektpunkt aus der ersten Auswahl zumindest die zweite Intensität der Lumineszenzstrahlung größer ist als die erste Intensität der Lumineszenzstrahlung oder die zweite Intensität der Lumineszenzstrahlung größer als die für den jeweiligen Objektpunkt in der ersten Objekterfassung zu erwartende erste Intensität der Lumineszenzstrahlung oder die zweite Erfassungsempfindlichkeit größer ist als die erste Erfassungsempfindlichkeit.

2. Verfahren nach dem vorhergehenden Anspruch, wobei das Verfahren weiterhin den Schritt umfasst
Bestimmen einer zweiten Auswahl von Objektpunkten, wobei zumindest für jeden Objektpunkt aus der zweiten Auswahl jeweils das Intensitätssignal der ersten Objekterfassung größer ist als der Intensitätssignalschwellenwert oder für jeden Objektpunkt aus der zweiten Auswahl jeweils das zu erwartende Intensitätssignal größer ist als der Intensitätssignalschwellenwert,
wobei während der zweiten Objekterfassung die zweite Auswahl von Objektpunkten auf der Oberfläche (2) des Prüfobjekts (3) nicht mit der Anregungsstrahlung (7, 7') beleuchtet wird.

3. Verfahren nach Anspruch 1, wobei das Verfahren weiterhin die Schritte aufweist Bestimmen einer zweiten Auswahl von Objektpunkten, wobei zumindest für jeden Objektpunkt aus der zweiten Auswahl jeweils das Intensitätssignal der ersten Objekterfassung größer ist als der Intensitätssignalschwellenwert oder für jeden Objektpunkt aus der zweiten Auswahl jeweils das zu erwartende Intensitätssignal größer ist als der Intensitätssignalschwellenwert, und
während der zweiten Objekterfassung
Beleuchten der zweiten Auswahl von Objektpunkten auf der Oberfläche (2) des Prüfobjekts (3) mit der Anregungsstrahlung (7, 7') mit einer dritten Anregungsintensität und
Erfassen der Intensität der Lumineszenzstrahlung für jeden aus der zweiten Auswahl von Objektpunkten mit einer dritten Erfassungsempfindlichkeit, wobei die Lumineszenzstrahlung jeweils von einem aus der zweiten Auswahl von Objektpunkten abgestrahlt wird,
wobei zumindest
die dritte Erfassungsempfindlichkeit kleiner ist als die zweite Erfassungsempfindlichkeit, oder
die Intensität der Lumineszenzstrahlung für jeden aus der zweiten Auswahl von Objektpunkten kleiner ist als ein Intensitätsschwellenwert.

4. Verfahren nach einem der vorhergehenden Ansprüche, wobei das Erfassen der Intensität der Lumineszenzstrahlung mit einem Punktdetektor erfolgt, wobei alle aus der Mehrzahl von Objektpunkten während der ersten Objekterfassung und alle Objektpunkte der ersten Auswahl während der zweiten Objekterfassung zeitlich nacheinander abgetastet werden.

5. Verfahren nach einem der Ansprüche 1 bis 3, soweit von Anspruch 2 abhängig, wobei das Erfassen der Intensität der Lumineszenzstrahlung mit einem Punktdetektor (11) erfolgt, wobei während der zweiten Objekterfassung nur die Objektpunkte der ersten Auswahl zeitlich nacheinander abgetastet werden.

6. Verfahren nach einem der Ansprüche 4 oder 5, wobei die Objektpunkte in einer Anordnung aus Zeilen und Spalten abgetastet werden.

7. Verfahren nach einem der Ansprüche 4 oder 5, wobei die Objektpunkte entlang einer Zeile abgetastet werden, während vorzugsweise das Prüfobjekt vorzugsweise senkrecht zu der Zeile bewegt wird.

8. Verfahren nach einem der vorhergehenden Ansprüche, wobei die Objektpunkte aus der Mehrzahl von Objektpunkten zeitlich nacheinander abgetastet werden, wobei die zweite Objekterfassung teilweise zeitgleich mit der ersten Objekterfassung erfolgt und wobei für jeden Objektpunkt die erste Objekterfassung abgeschlossen ist, bevor für den jeweiligen Objektpunkt die zweite Objekterfassung beginnt.

9. Verfahren nach einem der vorhergehenden Ansprüche soweit von Anspruch 3 abhängig, wobei das Bild der Oberfläche (2) des Prüfobjekts (3) die Intensitätssignale der Bildpunkte für die Objektpunkte aus der zweiten Auswahl von Objektpunkten umfasst.

10. Verfahren zum Herstellen eines Industrieprodukts mit den Schritten
Bereitstellen eines Rohstoffs, eines Rohlings oder eines Halbzeugs, Bearbeiten des Rohstoffs, des Rohlings oder des Halbzeugs, so dass das Industrieprodukt erzeugt wird, und
Prüfen des Industrieprodukts mit dem Verfahren nach einem der vorhergehenden Ansprüche, wobei das Industrieprodukt das Prüfobjekt ist.

11. System (1) zum Prüfen einer Oberfläche (2) eines Prüfobjekts (3) mit
einer Strahlungsquelle (6, 6'),
wobei die Strahlungsquelle (6, 6') derart eingerichtet ist, dass die Strahlungsquelle in einem Betrieb des Systems (1) elektromagnetische Anregungsstrahlung (7, 7') mit einer Anregungswellenlänge erzeugt und abstrahlt,
einer Beleuchtungseinrichtung (4),
wobei die Beleuchtungseinrichtung (4) derart angeordnet und eingerichtet ist, dass mit der Beleuchtungseinrichtung (4) in dem Betrieb des Systems (1) die Anregungsstrahlung (7, 7') auf eine Mehrzahl von Objektpunkten auf der Oberfläche (2) des Prüfobjekts (3) ablenkbar ist,
einem Detektor (11),
wobei der Detektor (11) derart angeordnet und eingerichtet ist, dass der Detektor (11) in dem Betrieb des Systems (1) jeweils eine Intensität einer elektromagnetischen Lumineszenzstrahlung für eine Mehrzahl von Bildpunkten mit einer ersten Erfassungsempfindlichkeit erfasst, wobei die Lumineszenzstrahlung eines Bildpunkts jeweils von einem aus der Mehrzahl von Objektpunkten abgestrahlt wird, und
wobei die Lumineszenzstrahlung eine von der Anregungswellenlänge verschiedene Lumineszenzwellenlänge aufweist, und
einer Steuer- und Auswerteeinrichtung (12, 13),
wobei die Steuer- und Auswerteeinrichtung (12, 13) derart wirksam mit dem Detektor verbunden ist, dass in dem Betrieb des Systems die Steuer- und Auswerteeinrichtung (12, 13) von dem Detektor (11) jeweils ein Intensitätssignal für jeden aus der Mehrzahl von Bildpunkten empfängt, wobei das Intensitätssignal die Intensität der Lumineszenzstrahlung des jeweiligen Objektpunkts repräsentiert,
wobei die Steuer- und Auswerteeinrichtung (12, 13) derart wirksam zumindest mit der Strahlungsquelle (6, 6') oder der Beleuchtungseinrichtung (4) verbunden ist, dass in dem Betrieb des Systems zumindest die Strahlungsquelle (6, 6') oder die Beleuchtungseinrichtung (4) ein Steuersignal von der Steuer- und Auswerteeinrichtung (12, 13) empfängt, und
wobei die Steuer- und Auswerteeinrichtung (12, 13) derart eingerichtet ist, dass sie in dem Betrieb des Systems (1) für eine erste Objekterfassung das Steuersignal derart erzeugt, dass eine Mehrzahl von Objektpunkten auf der Oberfläche (2) des Prüfobjekts (3) mit der Anregungsstrahlung (7, 7') mit einer ersten Anregungsintensität beleuchtet wird,
**dadurch gekennzeichnet, dass**
die Steuer- und Auswerteeinrichtung (12, 13) derart eingerichtet ist, dass sie in dem Betrieb des Systems (1) eine erste Auswahl von Objektpunkten bestimmt, wobei zumindest für jeden Objektpunkt aus der ersten Auswahl jeweils das Intensitätssignal der ersten Objekterfassung kleiner ist als ein Intensitätssignalschwellenwert oder für jeden Objektpunkt aus der ersten Auswahl jeweils ein für die erste Objekterfassung zu erwartendes Intensitätssignal kleiner ist als der Intensitätssignalschwellenwert,
die Steuer- und Auswerteeinrichtung (12, 13) derart eingerichtet ist, dass sie in dem Betrieb des Systems (1) für eine zweite Objekterfassung das Steuersignal derart erzeugt, dass
die erste Auswahl von Objektpunkten auf der Oberfläche (2) des Prüfobjekts (3) mit der Anregungsstrahlung (7, 7') mit einer zweiten Anregungsintensität beleuchtet wird,
die Intensität der Lumineszenzstrahlung für eine Mehrzahl von Bildpunkten mit einer zweiten Erfassungsempfindlichkeit erfasst wird, wobei die Lumineszenzstrahlung jedes aus der Mehrzahl von Bildpunkten jeweils von einem aus der Auswahl von Objektpunkten abgestrahlt wird, und ein erstes Bild der Oberfläche des Objekts mit den Intensitätssignalen der ersten Auswahl von Objektpunkten erzeugt wird,
wobei die zweite Objekterfassung zumindest teilweise zeitlich nach der ersten Objekterfassung erfolgt und
wobei für jeden Objektpunkt aus der ersten Auswahl zumindest die zweite Intensität der Lumineszenzstrahlung größer ist als die erste Intensität der Lumineszenzstrahlung oder die zweite Intensität der Lumineszenzstrahlung größer als die für den jeweiligen Objektpunkt in der ersten Objekterfassung zu erwartende erste Intensität der Lumineszenzstrahlung oder die zweite Erfassungsempfindlichkeit größer ist als die erste Erfassungsempfindlichkeit.

12. System (1) nach dem vorhergehenden Anspruch, wobei der Detektor (11) ein Photomultiplier ist, wobei die Erfassungsempfindlichkeit eine Verstärkung des Photomultipliers ist.

13. System (1) nach Anspruch 11 oder 12, wobei die Beleuchtungseinrichtung (4) einen in dem Betrieb des Systems um eine Drehachse rotierenden Polygonspiegel umfasst, wobei die Strahlungsquelle (6, 6') und die Beleuchtungseinrichtung (4) derart angeordnet und eingerichtet sind, dass eine erste Facette (18) des Polygonspiegels (17) von der Anregungsstrahlung (7, 7') der ersten Objekterfassung beleuchtet wird und die erste Facette (18) oder eine zweite Facette (18) des Polygonspiegels (17) von der Anregungsstrahlung (7, 7') der zweiten Objekterfassung beleuchtet wird, so dass ein und der selbe Objektpunkt oder benachbarte Objektpunkte zeitlich nacheinander von der von der Anregungsstrahlung (7, 7') der ersten Objekterfassung und von der Anregungsstrahlung (7, 7') der zweiten Objekterfassung beleuchtet werden.
